# FASCICULE DE BREVET EUROPEEN

(11) **EP 3 488 597 B1**
(45) Date de publication et mention de la délivrance du brevet: **01.12.2021**
(21) Numéro de dépôt: 17746039.1
(22) Date de dépôt: 24.07.2017
(51) Int. Cl.: H04M 1/18, H04M 1/21, A45C 15/00, A45D 34/02, A45C 11/00, A45D 34/00, B05B 11/00

(54) **DISPOSITIF DE PROTECTION POUR APPAREIL ÉLECTRONIQUE, NOTAMMENT POUR UN TÉLÉPHONE PORTABLE, MUNI D'UN ENSEMBLE DE DISTRIBUTION DE PRODUIT**
SCHUTZVORRICHTUNG FÜR ELEKTRONISCHE VORRICHTUNG, INSBESONDERE FÜR MOBILTELEFONE, MIT PRODUKTABGABEVORRICHTUNG
PROTECTIVE DEVICE FOR ELECTRONIC APPARATUS, PARTICULARLY FOR A MOBILE TELEPHONE, PROVIDED WITH A PRODUCT DISPENSING ASSEMBLY

(30) Priorité: 25.07.2016 FR 1657093
(43) Date de publication de la demande: 29.05.2019
(73) Titulaire: Albéa le Tréport, 76470 Le Tréport (FR)
(72) Inventeur: DUMONT, Pierre, Gabriel, Françis, 80570 Dargnies (FR); ELMEGUENNI, Mohamed, 80130 Friville Escarbotin (FR); HUBERDEAU, Emmanuel, 76370 Neuville-Les-Dieppe (FR); PRUVOST, Thomas, 80880 Saint-Quentin-La-Motte (FR)
(74) Mandataire: Gevers & Orès
(86) Numéro de dépôt international: PCT/EP2017/068698
(87) Numéro de publication internationale: WO 2018/019797

(56) Documents cités:
- EP-A1- 2 905 571
- EP-A1- 3 039 988
- WO-A1-2015/091973
- DE-U1-202011 106 292
- KR-B1- 101 201 612
- US-A1- 2012 218 106
- US-B1- 8 639 288

## Description

L'invention concerne un dispositif de protection pour appareil électronique, muni d'un ensemble de distribution de produit. L'invention se rapporte notamment à une coque de protection pour téléphone portable muni d'un flacon de produit cosmétique.

Pour protéger les appareils électroniques comme les téléphones portables ou les tablettes tactiles, il existe des protections destinées à les envelopper au moins en partie, et qui ont pour fonction d'éviter les contacts directs avec l'appareil, par exemple en cas de chute. Certaines protections consistent en particulier en des enveloppes en matériau souple, tel du caoutchouc ou du cuir, afin de pouvoir absorber les chocs. D'autres protections sont faites, au contraire, d'un matériau rigide formant une coque, pour agir comme un bouclier.

On a souhaité ajouter des fonctionnalités à ces protections, pour les rendre plus utiles. Ainsi, certaines protections ont par exemple été conçues pour pouvoir transporter des objets du quotidien. En particulier, certaines protections sont configurées pour pouvoir ranger des flacons de produit cosmétique, tel que du parfum, ou des flacons de produit pharmaceutique. On connait par exemple la demande de brevet WO 2012/156546, qui montre une protection munie d'une poche de rangement latérale permettant d'y insérer un flacon de parfum.

Un autre document WO 2013/020591 porte sur une coque comportant un flacon amovible de forme sensiblement plane sur la face arrière de la coque. La coque est configurée pour pouvoir ranger le flacon dans une épaisseur réduite de la coque. Ainsi, le flacon peut être actionné, soit en position de rangement sur la coque, soit à distance de la coque lorsqu'il est retiré de son rangement.

Cependant, un tel système n'est pas très aisé à utiliser, car il faut appuyer sur le bouton d'actionnement du flacon, qui n'est pas de grande dimension, tout en veillant à tenir fermement l'ensemble formé de l'appareil et de la coque pour éviter qu'il ne tombe. De plus, il est difficile avec de telles précautions, d'arriver à viser dans une direction précise pour la distribution du produit.

Les documents US 2012/218106, KR 101 201 612, DE 20 2011 1062292, EP 2 905 571, et US 8 639 288 divulguent l'intégration d'un ensemble de distribution d'un produit dans une coque de protection pour un appareil électronique.

L'invention vise à améliorer la situation en évitant les défauts précités, en fournissant une enveloppe de protection comprenant un flacon de distribution dont l'actionnement est facilité.

Pour cela, l'invention concerne un dispositif de protection pour appareil électronique, notamment un téléphone portable, tel que défini dans la revendication 1.

Ainsi, grâce à l'invention, il suffit de déplacer le récipient par rapport à l'enveloppe pour déclencher la distribution du produit, sans avoir à agir directement sur l'ensemble de distribution. On évite de la sorte à devoir agir directement sur un actionneur de l'ensemble de distribution, tel un bouton-poussoir par exemple, pour actionner ladite distribution.

De plus, l'actionnement du dispositif offre un effet esthétique novateur par rapport à ce qui existe actuellement, car pour actionner la distribution, on doit effectuer un déplacement du récipient par rapport à l'enveloppe de protection.

Ainsi, pour opérer la distribution du produit, lorsque le dispositif de protection est agencé sur un appareil électronique tel un téléphone portable, il suffit de tenir d'une main l'enveloppe et l'appareil électronique, tandis qu'on déplace le récipient, par exemple de l'autre main, pour distribuer le produit. Réciproquement, la distribution peut aussi être effectuée en tenant le récipient immobile, et en déplaçant l'enveloppe et l'appareil électronique de l'autre main.

Selon différents modes de réalisation de l'invention, qui pourront être pris ensemble ou séparément :
- la structure de maintien comprend un couvercle mobile agencé sur l'enveloppe de protection,
- le dispositif comprend des moyens de verrouillage du déplacement de la structure de maintien par rapport à l'enveloppe, de manière à empêcher l'actionnement de l'ensemble de distribution,
- les moyens d'actionnement sont fixes par rapport à l'enveloppe de protection lors de l'actionnement de la distribution du produit,
- l'enveloppe comprend des moyens de fixation amovibles de l'enveloppe de protection à l'appareil électronique,
- l'ensemble de distribution comprend une buse de pulvérisation du produit,
- la buse de pulvérisation du produit est agencée sur l'enveloppe,
- l'ensemble de distribution comprend une pompe pour aspirer le produit,
- la pompe est agencée sur le récipient,
- ladite pompe est actionnable par les moyens d'actionnement,
- les moyens d'actionnement comprennent un poussoir pour actionner la pompe,
- le poussoir est agencé sur la pompe,
- le poussoir est mobile par rapport au récipient,
- l'enveloppe comprend un puits de réception du poussoir,
- la buse est agencée sur le puits de réception de manière à recevoir le produit provenant de l'orifice de distribution du puits de réception,
- au moins l'une des parties du dispositif est faite d'un matériau dont la composition comprend du Poly-Butadiène-Téréphtalate, de préférence mélangé à du Polyéthylène Téréphtalate,
- ladite structure est configurée pour être tenue en main par un utilisateur, par exemple entre le pouce et le majeur, l'enveloppe étant configurée pour être actionnable par l'index de la même main,
- l'enveloppe comprend des moyens de fixation amovibles de l'enveloppe de protection à l'appareil électronique,
- le dispositif comprend un espace d'emboîtement du récipient,
- le dispositif comprend des moyens de d'accrochage du récipient dans l'espace d'emboîtement,
- le poussoir est doté d'un orifice de sortie du produit hors de la pompe,
- le récipient est fixé à la structure de maintien,
- le récipient est fixé à la structure de maintien de manière amovible,
- l'enveloppe de protection comprend une coque,
- la coque est faite d'un matériau rigide,
- la coque comprend une paroi principale,
- le couvercle est sensiblement parallèle à la paroi principale,
- le couvercle se déplace parallèlement à la paroi principale,
- la paroi principale comprend deux rebords transversaux,
- la paroi comprend une face interne auprès de laquelle l'appareil électronique est positionné,
- le ou les rebords comportent les moyens de fixation amovibles,
- les moyens de fixation comportent des encoignures formées aux coins des rebords,
- chaque encoignure est configurée pour retenir un coin de l'appareil électronique,
- les encoignures sont munies de plots pour retenir les coins de l'appareil électronique,
- le couvercle est destiné à recouvrir une face externe de la paroi principale de la coque,
- le couvercle comprend des côtés recourbés sur les arêtes longitudinales de la paroi principale,
- les côtés recourbés sont munis de rainures configurées pour recevoir les arêtes longitudinales de la face principale, afin de permettre le déplacement du couvercle le long de la paroi principale, tout en lui restant solidaire,
- les moyens de verrouillage comprennent un bouton mobile agencé sur la coque,
- le bouton est configuré pour, dans une première position, bloquer le déplacement de la structure de maintien, et, dans une seconde position, permettre le déplacement de la structure de maintien,
- le bouton comprend une butée et la structure de maintien comprend une contre butée agencées pour venir en contact l'une avec l'autre, lorsque le bouton est dans la première position,
- le bouton est bloqué par la contre butée dans la première position.

L'invention sera mieux comprise à la lumière de la description suivante qui n'est donnée qu'à titre indicatif et qui n'a pas pour but de la limiter, accompagnée des dessins joints :
- la figure 1 illustrant de façon schématique, une vue en perspective d'un dispositif de protection selon un mode de réalisation de l'invention,
- la figure 2 illustrant de façon schématique, une vue en perspective du dispositif de protection de la figure 1, le dispositif étant représenté dans une configuration où la distribution est actionnée,
- la figure 3 illustrant de façon schématique, une vue en perspective du dispositif de protection, dont les éléments sont séparés,
- la figure 4 illustrant de façon schématique, une vue en perspective, selon un angle différent, du dispositif dont les éléments sont séparés,
- la figure 5 illustrant de façon schématique, une vue en coupe transversale du dispositif, et une vue agrandie d'un détail de cette vue en coupe,
- la figure 6 illustrant de façon schématique, une vue en coupe longitudinale du dispositif,
- la figure 7 illustrant de façon schématique, une vue de côté de l'enveloppe de protection, dans laquelle les moyens de verrouillage sont en position verrouillée, et une vue agrandie des moyens de verrouillage,
- la figure 8 illustrant de façon schématique, une vue de côté de l'enveloppe de protection, dans laquelle les moyens de verrouillage sont en position déverrouillée, et une vue agrandie des moyens de verrouillage,
- la figure 9 illustrant de façon schématique, une vue en perspective du dispositif, et une vue agrandie des moyens de verrouillage.

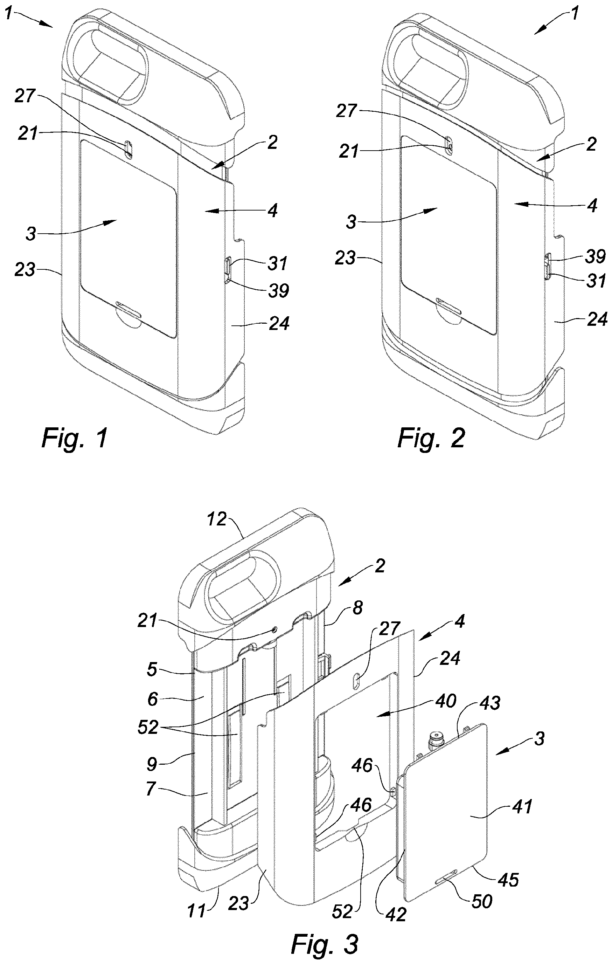

Comme représenté sur les figures 1 à 4, l'invention concerne un dispositif de protection 1 pour appareil électronique, ici pour un téléphone portable, le dispositif présentant un passage pour l'objectif du téléphone. Le dispositif 1 comprend une enveloppe de protection 2 apte à être fixée à l'appareil électronique dans le but de le protéger en cas de choc ou de chute. L'enveloppe de protection 2 comprend ici une coque, de préférence faite d'un matériau rigide pour une protection optimum. La coque est dotée d'une paroi principale 6 formant le fond de l'enveloppe 2, la paroi principale 6 comprenant deux arêtes longitudinales 8, 9 et deux rebords transversaux 11, 12. La paroi 6 a aussi une face interne 5 auprès de laquelle l'appareil électronique est destiné à être positionné, lorsque l'enveloppe 2 est fixée à l'appareil, et une face externe 7 opposée à la face interne 5.

Pour assembler la protection à l'appareil électronique, l'enveloppe 2 comprend des moyens de fixation 13, qui sont de préférence amovibles, de manière à pouvoir ôter l'enveloppe 2 de l'appareil électronique, par exemple pour changer la batterie de l'appareil. Les rebords 11, 12 comportent les moyens de fixation amovibles, qui sont ici des encoignures 14 formées aux coins des rebords 11, 12. Chaque encoignure 14 est configurée pour retenir un coin de l'appareil électronique. Pour cela, les encoignures 14 ceignent les coins de l'appareil et sont munies de plots 15 qui retiennent l'appareil électronique en le serrant.

Le dispositif 1 comporte en outre un ensemble de distribution d'un produit, notamment un produit cosmétique. L'ensemble de distribution comprend en particulier un récipient 3 muni d'un réservoir dudit produit et de moyens d'actionnements configurés pour actionner la distribution du produit.

Le récipient 3 est ici un flacon pourvu d'un goulot 16 ouvert sur le réservoir, et d'une pompe 17 pour aspirer le produit qui se trouve dans le réservoir. La pompe 17 est ici une pompe manuelle usuelle agencée dans le réservoir du récipient 3 au niveau du goulot 16. Une telle pompe 17 est par exemple formée d'une chambre à piston, d'un tube plongeur agencé dans le réservoir pour aspirer le produit, et d'un conduit de sortie qui mène le produit hors de la pompe. Le conduit de sortie est relié au piston, de sorte que le piston est actionné par le déplacement du conduit de sortie. La pompe 17 est actionnable grâce aux moyens d'actionnement, qui sont ici munis d'un poussoir 18 agencé sur le conduit de sortie de la pompe, et d'un ressort hélicoïdal de rappel du poussoir 18 disposé autour du conduit de sortie. Ainsi, une pression sur le poussoir 18 induit le déplacement du conduit de sortie et l'actionnement du piston dans la chambre, pour extraire le produit qui y est présent. Le poussoir 18 retrouve ensuite sa position initiale grâce au ressort.

Le poussoir 18 est de plus doté d'un orifice de sortie 19 en communication avec le conduit de sortie pour permettre le passage du produit hors de la pompe, depuis la chambre, le conduit de sortie, et enfin à travers le poussoir 18.

L'ensemble de distribution comprend aussi une buse de pulvérisation 20 du produit, munie d'un trou d'évacuation 21 vers l'extérieur du récipient et du dispositif de protection, le trou 21 étant de préférence du côté opposé à celui de l'appareil électronique. La buse 20 est en communication avec l'orifice de sortie 19 du poussoir 18 pour que le produit passant par le poussoir 18 soit guidé dans la buse 20.

L'ensemble de distribution est monté sur l'enveloppe 2 de sorte que le récipient 3 est mobile par rapport à l'enveloppe 2, de préférence selon un degré de liberté correspondant à celui de l'actionnement de la pompe. Autrement dit, le récipient 3 est mobile selon une direction de déplacement, la direction étant de préférence celle selon laquelle le poussoir 18 est mu pour actionner la pompe 17. Cette direction est donc de préférence dirigée selon le conduit de sortie de la pompe 17.

A cette fin, le dispositif de protection comprend une structure de maintien 4 du récipient 3 avec l'enveloppe 2. La structure 4 est ici montée sur l'enveloppe 2 de manière mobile pour permettre le déplacement du récipient 3. Autrement dit, la structure 4 est solidaire du récipient 3, et ils se déplacent ensemble. Dans l'invention, on agit sur la structure de maintien 4 pour déplacer le récipient 3 par rapport à l'enveloppe 2.

Sur les figures, la structure de maintien 4 comprend un couvercle 22 mobile agencé sur l'enveloppe de protection 2. Le couvercle 22 recouvre la face externe 7 de la paroi principale 6 de la coque. Le couvercle 22 est sensiblement parallèle à la paroi principale 6, et peut se déplacer parallèlement à la paroi principale 6. Le couvercle 22 a ici des côtés longitudinaux recourbés 23, 24, qui s'étendent sur les arêtes longitudinales 8, 9 de la paroi principale 6. Le couvercle 22 comprend également ici une ouverture 27 pour permettre le passage du produit sortant de la buse 20, car dans le mode de réalisation représenté, le couvercle 22 recouvre la buse 20 de l'enveloppe 2. Selon d'autres modes de réalisation dans lesquels le couvercle 22 ne recouvre pas la buse 20, une telle ouverture n'est pas nécessaire.

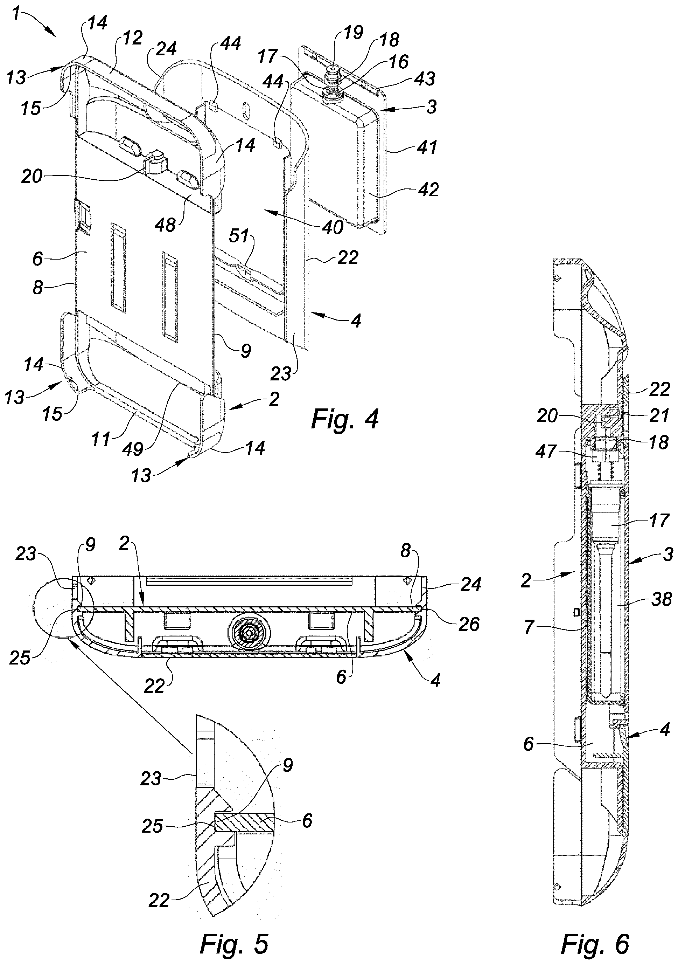

Comme le montre la figure 5, les côtés recourbés 23, 24 sont munis de rainures 25, 26 agencées pour recevoir les arêtes longitudinales 8, 9 de la face principale 6. De la sorte, les arêtes longitudinales 8, 9 peuvent glisser dans les rainures 25, 26 afin de permettre le déplacement du couvercle 22 le long de la paroi principale 6, tout en restant solidaires dans les autres directions. Le couvercle 22 est lié à la paroi principale 6 de la coque grâce aux rainures 25, 26, mais peut se déplacer par rapport à la coque.

Selon l'invention, le dispositif 1 est configuré pour que le déplacement du récipient 3 par rapport à l'enveloppe 2 actionne la distribution du produit. Pour cela, les moyens d'actionnement sont fixes par rapport à l'enveloppe de protection lors de l'actionnement de la distribution, tandis que le récipient 3 suit le déplacement de la structure de maintien 4. Autrement dit, le poussoir 18 est mobile par rapport au récipient 3. Ainsi, la structure de maintien 4 et le réservoir du récipient 3 se déplacent ensemble par rapport à l'enveloppe 2 en direction du poussoir 18, ce dernier restant immobile. Pour cela, le poussoir 18 est maintenu par la coque de l'enveloppe 2, en particulier pour éviter qu'il puisse se déplacer dans la même direction que le récipient 3. Par conséquent, le poussoir 18 appuie sur le conduit de sortie, de sorte que la pompe est actionnée, ce qui provoque la distribution d'au moins une partie du produit contenu dans le réservoir.

En outre, le récipient 3 est de préférence assemblé de manière amovible à la structure de maintien 4. Pour cela, le dispositif 1 comprend ici un espace d'emboîtement 38 du récipient 3, comme cela est représenté sur la figure 6. L'espace d'emboîtement 38 est défini entre la face externe 7 de la paroi principale 6 de l'enveloppe de protection 2 et le couvercle 22 de la structure de maintien 4, qui est disposé par exemple à une distance correspondant sensiblement à l'épaisseur du récipient, afin que ce-dernier soit entièrement emboîté dans l'espace 38.

Le couvercle 22 de la structure de maintien 4 est de plus ouvert en son centre pour permettre l'insertion du récipient 3 dans l'espace 38. Cette ouverture 40 a ici des dimensions au moins égales à celles du récipient 3, pour faciliter son insertion.

Sur les figures 3 et 4, on remarque que le récipient 3 a une forme rectangulaire, de préférence peu épais, pour pouvoir être inséré facilement dans l'espace d'emboîtement 38, et pour que l'espace d'emboîtement 38 ne soit pas trop volumineux. Le récipient 3 comprend une partie d'accrochage munie d'une paroi 41 sensiblement plane, et une partie support 42, de forme sensiblement rectangulaire, rapportée sur la paroi 41, et qui définit le volume du réservoir du récipient 3. Les dimensions de la paroi 41 sont plus grandes que les dimensions de la partie support 42. Un premier bord 43 de la paroi 41 est destiné à reposer sur des premiers ergots 44 du couvercle 22 s'étendant dans l'ouverture 40. Un deuxième bord 45 opposé au premier est destiné à reposer sur des deuxièmes ergots 46 du couvercle 22, qui s'étendent dans l'ouverture 40.

Le dispositif 1 comprend de plus des moyens d'accrochage du récipient 3 dans l'espace d'emboîtement 38. Les moyens d'accrochage sont par exemple un système d'encliquetage, avec un cran d'encliquetage 50 agencé d'une part sur le deuxième bord 45 de la paroi 41 et une fente de réception 51 du cran d'encliquetage 50 agencée sur le couvercle 22 au niveau de l'ouverture 40.

La face externe 7 de la paroi principale 6 est ici pourvue d'au moins une lame ressort 52, ici deux comme le montre la figure 3, pour faciliter le retrait du récipient hors de l'espace d'emboîtement 38. Ainsi, lorsque le récipient 3 est emboîté, il repousse les lames 52, et reste dans la position grâce aux moyens d'accrochage du récipient 3, qui s'opposent à la force exercée par les lames ressort.

Dans ce mode de réalisation, l'ensemble de distribution est divisé en deux parties, une première partie est disposée sur l'enveloppe de protection 2 et une deuxième partie sur la structure de maintien 4. D'une part, la buse 20 et le trou d'évacuation 21 sont intégrés à l'enveloppe de protection 2, et d'autre part le récipient 3 muni de la pompe 17 et du poussoir 18. Ainsi, lorsque le récipient 3 est retiré de l'espace d'emboîtement, la buse 20 et le trou d'évacuation 21 sont séparés du reste de l'ensemble de distribution.

L'enveloppe 2 comprend de plus un puits de réception 47 du poussoir 18. Ainsi, lorsque le récipient 3 est emboîté, le poussoir 18 est introduit dans le puits 47. Le puits de réception 47 est agencé sous la buse 20 de manière à ce que le produit provenant de l'orifice de distribution 19 du poussoir 18 passe dans la buse 20. Les bords 11, 12 de l'enveloppe de protection 2 présentent chacun une paroi en porte à faux 48, 49 par rapport à la paroi principale 6, orientée vers la face externe 7. Les parois en porte à faux 48, 49 délimitent longitudinalement l'espace d'emboîtement 38, et sont perpendiculaires aux bords courbés du couvercle 22. Le puits 47 et la buse 20 sont formés sur l'une des parois en porte à faux, à l'extérieur de l'espace d'emboîtement 38, le puits 47 étant ouvert par cette paroi en porte à faux 48, vers l'espace d'emboîtement 38.

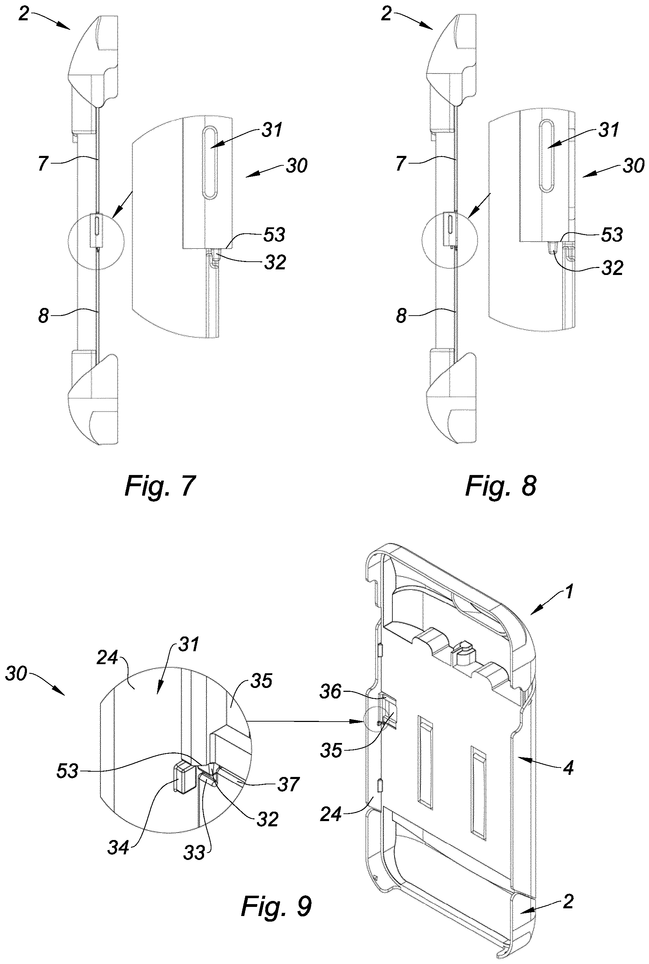

Comme représenté sur les figures 7 à 9, le dispositif 1 comprend des moyens de verrouillage 30 du déplacement de la structure de maintien 4 par rapport à l'enveloppe 2, afin d'empêcher l'actionnement inopiné de l'ensemble de distribution. Les moyens de verrouillage 30 comprennent ici un bouton mobile 31 agencé sur l'enveloppe 2, et disposé sur une arête longitudinale 8 de la paroi principale 6. Le bouton 30 est configuré pour, dans une première position représentée sur la figure 7, bloquer le déplacement de la structure de maintien 4, et, dans une seconde position représentée sur la figure 8, permettre le déplacement de la structure de maintien 4. Ainsi, l'ensemble de distribution peut-être actionné, lorsque le bouton 31 est dans la deuxième position.

Dans ce but, le bouton 31 est doté d'une butée 32 qui s'étend depuis le bouton 31, ici sous le bouton 31. L'enveloppe a une échancrure 33 et la structure de maintien 4 une contre butée 34 agencée sur le côté recourbé 24. La butée 32 est configurée pour venir s'insérer dans l'échancrure 33 et être bloquée par la contre butée 34, lorsque le bouton 31 est dans la première position. Le bouton 31 est de plus articulé par une cloison 35 fixée rotative à la paroi principale 6 qui comporte une ouverture 36 correspondante pour permettre à la cloison 35 de s'insérer dans la paroi principale 6. L'échancrure 33 est agencée sur une arête 37 de l'ouverture 36, de sorte que la butée 32 est bloquée dans l'échancrure 33 par la contrebutée 34, ce qui empêche la poursuite de la rotation de la cloison 35.

Dans la première position, une arête inférieure 53 du bouton 31 est au-dessus de la contrebutée 34. La structure de maintien 4 est ainsi bloquée car la contre butée ne peut remonter à cause du bouton 31. A contrario, dans la deuxième position, la cloison 35 est du côté de la face extérieur 7 de la paroi principale 6, et n'est donc plus dans l'ouverture 36. Ainsi, la butée 32 n'est pas dans l'échancrure 33, et l'arête inférieure 53 du bouton 31 n'est pas au-dessus de la contrebutée 34. La structure de maintien 4 peut donc être déplacée par rapport à l'enveloppe de protection 2, pour provoquer la distribution du produit.

Sur les figures 1 et 2, on voit que le côté recourbé 24 a aussi un passage 39 permettant l'accès au bouton 31 qui est disposé entre l'arête longitudinale 8 de la paroi principale 6 de l'enveloppe 2 et le côté recourbé 24 du couvercle 22.

On observe que ladite structure 4 est configurée pour être tenue en main par un utilisateur, par exemple entre le pouce et le majeur, l'enveloppe 2 étant configurée pour être actionnable par l'index de la même main pour déclencher la distribution du produit. Selon un autre gestuelle, la structure 4 est tenue dans une main et l'utilisateur actionne l'enveloppe 2 avec l'autre main.

Par ailleurs, pour la fabrication des différentes parties du dispositif de protection, on utilise une composition de matériau comprenant majoritairement du PBT (pour Poly-Butadiène-Téréphtalate) à au moins 80%, voire 90% de la composition. Le PBT a l'avantage d'avoir une bonne résistance chimique, une tenue aux chocs, un aspect de surface intéressant, une mémoire de forme et évite les retassures. La composition comprend également un additif, tel que du PET (pour Polyéthylène Téréphtalate), dans des proportions de 5% à 10% de la composition. On peut encore ajouter à la composition un retardateur de flamme, tel qu'un mélange à base de sel métallique d'acide phosphorique organique.

On obtient ainsi des pièces dont l'aspect est amélioré en plus d'une excellente brillance, ainsi qu'une plus grande facilité à être décorée et de résister aux rayures. Grâce à cette composition, on peut réaliser tous les éléments, c'est-à-dire l'enveloppe, la structure de maintien et le récipient, dans une seule matière thermoplastique, ceci afin d'obtenir une homogénéité d'aspect entre les différents composants, aussi bien lorsque le produit est neuf que lorsqu'il est usagé.

Cette matière assure des performances cumulées de chacun des composants, tels que la compatibilité avec le parfum contenant au moins 80% d'éthanol, un faible coefficient de frottement entre deux pièces de même matière, la compatibilité avec un additif anti-UV pour stabiliser le vieillissement lumière des teintes, un module d'élasticité au moins égal à 2000 MPa pour la mémoire de forme, la capacité d'être soudé par ultrasons de manière étanche. La matière de base a une teinte transparente, translucide ou blanche, ce qui facilite la décoration, par exemple par tampographie ou sérigraphie, et qui est de plus métallisable et galvanisable.

Cette composition permet donc d'améliorer les caractéristiques d'une matière dont le coût de fourniture et de mise en œuvre est beaucoup moins élevé que celui des fluoro-polymères, qui sont actuellement utilisés dans ce but. De plus, on évite la présence de fluor, qui est suspecté de nuisance sur la santé humaine.

## Revendications

1. Dispositif de protection pour appareil électronique, notamment un téléphone portable, comprenant une enveloppe de protection (2), ladite enveloppe (2) étant apte à être fixée à l'appareil électronique, le dispositif (1) comportant un ensemble de distribution d'un produit, notamment un produit cosmétique, l'ensemble de distribution étant muni d'un récipient (3) dudit produit et de moyens d'actionnement de la distribution du produit, l'ensemble de distribution étant monté sur l'enveloppe (2) de sorte que le récipient (3) soit mobile par rapport à l'enveloppe (2), le déplacement du récipient (3) par rapport à l'enveloppe (2) actionnant la distribution du produit, ledit dispositif étant **caractérisé en ce qu'**il comprend une structure de maintien (4) du récipient (3) à l'enveloppe (2), ladite structure (4) étant montée sur l'enveloppe (2) de manière mobile pour permettre le déplacement du récipient (3), ladite structure (4) comprenant un couvercle mobile (22) agencé sur l'enveloppe de protection (2).

2. Dispositif selon la revendication 1, dans lequel le récipient (3) est fixé à la structure de maintien (4).

3. Dispositif selon la revendication 2, dans lequel le récipient (3) est fixé de manière amovible à la structure de maintien (4)

4. Dispositif selon la revendication 3, comprenant un espace d'emboîtement (38) du récipient (3).

5. Dispositif selon la revendication 4, comprenant des moyens de d'accrochage du récipient (3) dans l'espace d'emboîtement (38).

6. Dispositif selon l'une quelconque des revendications précédentes, comprenant des moyens de verrouillage (30) du déplacement de la structure de maintien (4) par rapport à l'enveloppe (2), de manière à empêcher l'actionnement de l'ensemble de distribution du produit.

7. Dispositif selon la revendication 6, dans lequel les moyens de verrouillage (30) comportent un bouton (31) mobile configuré pour, dans une première position, bloquer le déplacement de la structure de maintien (4), et, dans une seconde position, permettre le déplacement de la structure de maintien (4) par rapport à l'enveloppe de protection (2).

8. Dispositif selon l'une quelconque des revendications précédentes, dans lequel les moyens d'actionnement sont fixes par rapport à l'enveloppe de protection (2) lors de l'actionnement de la distribution.

9. Dispositif selon l'une quelconque des revendications précédentes, dans lequel l'enveloppe (2) comprend des moyens de fixation amovibles de l'enveloppe de protection (2) à l'appareil électronique.

10. Dispositif selon l'une quelconque des revendications précédentes, dans lequel l'ensemble de distribution comprend une buse de pulvérisation (20) du produit agencée sur l'enveloppe (2), et une pompe (17) actionnable par les moyens d'actionnement pour aspirer le produit, la pompe (17) étant agencée sur le récipient (3).

11. Dispositif selon l'une quelconque des revendications précédentes, dans lequel les moyens d'actionnement comprennent un poussoir (18) agencé sur le récipient (3).

12. Dispositif selon la revendication 11, dans lequel l'enveloppe (2) comprend un puits de réception (47) du poussoir (18),

13. Dispositif selon l'une quelconque des revendications précédentes, dans lequel au moins l'une des parties du dispositif (1) est faite d'un matériau dont la composition comprend du Poly-Butadiène-Téréphtalate, de préférence mélangé à du Polyéthylène Téréphtalate.

## Patentansprüche

1. Schutzvorrichtung für elektronische Einrichtung, insbesondere ein tragbares Telefon, umfassend eine Schutzhülle (2), wobei die Hülle (2) geeignet ist, um an der elektronischen Einrichtung befestigt zu werden, wobei die Vorrichtung (1) eine Montage zum Verteilen eines Produkts umfasst, insbesondere eines kosmetischen Produkts, wobei die Montage zum Verteilen mit einem Behälter (3) des Produkts und mit Betätigungsmitteln zum Verteilen des Produkts ausgestattet ist, wobei die Montage zum Verteilen derart auf der Hülle (2) angebracht ist, dass der Behälter (3) in Bezug auf die Hülle (2) bewegbar ist, wobei die Bewegung des Behälters (3) in Bezug auf die Hülle (2) die Verteilung des Produkts tätigt, wobei die Vorrichtung **dadurch gekennzeichnet ist, dass** sie eine Haltestruktur (4) des Behälters (3) an der Hülle (2) umfasst, wobei die Struktur (4) auf bewegbare Weise an der Hülle (2) angebracht ist, um die Bewegung des Behälters (3) zu erlauben, wobei die Struktur (4) einen bewegbaren Deckel (22) umfasst, der auf der Schutzhülle (2) eingerichtet ist.

2. Vorrichtung nach Anspruch 1, wobei der Behälter (3) an der Haltestruktur (4) befestigt ist.

3. Vorrichtung nach Anspruch 2, wobei der Behälter (3) auf abnehmbare Weise an der Haltestruktur (4) befestigt ist

4. Vorrichtung nach Anspruch 3, umfassend einen Raum zum Einpassen (38) des Behälters (3).

5. Vorrichtung nach Anspruch 4, umfassend Mittel zum Einrasten des Behälters (3) in den Raum zum Einpassen (38).

6. Vorrichtung nach einem der vorstehenden Ansprüche, umfassend Mittel zum Verriegeln (30) der Bewegung der Haltestruktur (4) in Bezug auf die Hülle (2) derart, dass die Betätigung der Montage zum Verteilen des Produkts verhindert wird.

7. Vorrichtung nach Anspruch 6, wobei die Mittel zum Verriegeln (30) einen bewegbaren Knopf (31) umfassen, der konfiguriert ist, um in einer ersten Position die Bewegung der Haltestruktur (4) zu blockieren und in einer zweiten Position die Bewegung der Haltestruktur (4) in Bezug auf die Schutzhülle (2) zu erlauben.

8. Vorrichtung nach einem der vorstehenden Ansprüche, wobei die Betätigungsmittel beim Betätigen der Verteilung in Bezug auf die Schutzhülle (2) festgestellt sind.

9. Vorrichtung nach einem der vorstehenden Ansprüche, wobei die Hülle (2) abnehmbare Mittel zum Befestigen der Schutzhülle (2) an der elektronischen Einrichtung umfasst.

10. Vorrichtung nach einem der vorstehenden Ansprüche, wobei die Montage zum Verteilen eine Düse zum Zerstäuben (20) des Produkts umfasst, die an der Hülle (2) eingerichtet ist, und eine Pumpe (17), die von den Betätigungsmitteln betätigbar ist, um das Produkt anzusaugen, wobei die Pumpe (17) auf dem Behälter (3) eingerichtet ist.

11. Vorrichtung nach einem der vorstehenden Ansprüche, wobei die Betätigungsmittel einen Drücker (18) umfassen, der auf dem Behälter (3) eingerichtet ist.

12. Vorrichtung nach Anspruch 11, wobei die Hülle (2) eine Wanne zum Aufnehmen (47) des Drückers (18) umfasst,

13. Vorrichtung nach einem der vorstehenden Ansprüche, wobei mindestens eines der Teile der Vorrichtung (1) aus einem Material hergestellt ist, dessen Zusammensetzung Polybutadienterephthalat umfasst, vorzugsweise vermischt mit Polyethylenterephthalat.

## Claims

1. A protective device for an electronic apparatus, in particular a mobile telephone, comprising a protective casing (2), said casing (2) being capable of being fixed to the electronic apparatus, the device (1) comprising an assembly for dispensing a product, in particular a cosmetic product, the dispensing assembly being equipped with a receptacle (3) for said product and with means for activating the dispensing of the product, the dispensing assembly being mounted on the casing (2) in such a way that the receptacle (3) is movable with respect to the casing (2), the movement of the receptacle (3) with respect to the casing (2) actuating the dispensing of the product, said device being **characterized in that** it comprises a structure (4) for holding the receptacle (3) to the casing (2), said structure (4) being mounted on the casing (2) in a movable manner to allow the movement of the receptacle (3), said structure (4) comprising a movable cover (22) arranged on the protective casing (2).

2. The device according to claim 1, wherein the receptacle (3) is attached to the holding structure (4).

3. The device according to claim 2, wherein the receptacle (3) is removably attached to the holding structure (4).

4. The device according to claim 3, comprising a nesting space (38) of the receptacle (3).

5. The device according to claim 4, comprising means for hooking the receptacle (3) into the nesting space (38).

6. The device according to any one of the preceding claims, comprising means for locking (30) the movement of the holding structure (4) with respect to the casing (2), so as to prevent the activation of the assembly for dispensing the product.

7. The device according to claim 6, wherein the locking means (30) comprise a movable knob (31) configured to, in a first position, block the movement of the holding structure (4), and, in a second position, allow the movement of the holding structure (4) with respect to the protective casing (2).

8. The device according to any one of the preceding claims, wherein the activation means are fixed with respect to the protective casing (2) upon the activation of the dispenser.

9. The device according to any one of the preceding claims, wherein the casing (2) comprises means for removable attachment of the protective casing (2) to the electronic apparatus.

10. The device according to any one of the preceding claims, wherein the dispensing assembly comprises a spray nozzle (20) for the product arranged on the casing (2), and a pump (17) operable by the activation means to suck up the product, the pump (17) being arranged on the receptacle (3).

11. The device according to any one of the preceding claims, wherein the activation means comprise a pusher (18) arranged on the receptacle (3).

12. The device according to claim 11, wherein the casing (2) comprises a well (47) for receiving the pusher (18).

13. The device according to any one of the preceding claims, wherein at least one of the parts of the device (1) is made of a material whose composition comprises PolyButadiene-Terephthalate, preferably mixed with Polyethylene Terephthalate.
